Europäisches Patentamt

European Patent Office

Office européen des brevets

(19)

(11) **EP 1 519 438 A2**

(12) **EUROPEAN PATENT APPLICATION**

(43) Date of publication:
**30.03.2005 Bulletin 2005/13**

(51) Int Cl.[7]: **H01M 8/04**, H01M 8/02

(21) Application number: **04016718.1**

(22) Date of filing: **15.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **29.09.2003 JP 2003338187**

(71) Applicant: **NISSAN MOTOR CO., LTD.**
**Yokohama-shi Kanagawa-ken (JP)**

(72) Inventors:
• **Zhang, Jianbo**
  **Yokosuka-shi Kanagawa-ken (JP)**
• **Takekawa, Toshihiro**
  **Yokosuka-shi Kanagawa-ken (JP)**
• **Tajiri, Kazuya**
  **State College Pennsylvania 16803 (US)**

(74) Representative: **Grünecker, Kinkeldey,**
**Stockmair & Schwanhäusser Anwaltssozietät**
**Maximilianstrasse 58**
**80538 München (DE)**

(54) **Polymer electrolyte fuel cell and related method**

(57)     A polymer electrolyte fuel cell includes an electric power generating cell provided with a fuel electrode (2), an oxidizer electrode (3), a polymer electrolyte membrane (1) sandwiched between the fuel electrode (2) and the oxidizer electrode (3) and a separator (5) formed with a gas flow passage (7) for reaction gas to be supplied to at least one of the fuel electrode and the oxidizer electrode. Also, the polymer electrolyte fuel cell includes a flow passage changeover mechanism (10,11,21,22,31,32) changing over a configuration of the gas flow passage in accordance with an operating condition of a polymer electrolyte fuel cell.

FIG.1

EP 1 519 438 A2

**Description**

## BACKGROUND OF THE INVENTION

This invention relates to a polymer fuel cell (PEFC), which employs a solid polymer membrane as an electrolyte, and a related method and, more particularly, to a polymer electrolyte fuel cell that is provided with a flow passage changeover mechanism that alters a configuration of a gas flow passages of a separator depending upon operating conditions, and its related method.

A fuel cell operates to electrochemically react fuel gas, such as hydrogen gas, and oxidizer gas, such as air, both of which form reaction gases whereby chemical energy of fuel is directly converted to electrical energy. Such a fuel cell has attracted much interest recently because of its clean emission and potential technology, with high-energy efficiency, to countermeasure global warming issues such as air pollution and carbon dioxide emission.

Electrode reactions proceed on both of a fuel electrode and an oxidizer electrode of the fuel cell as demonstrated below.

$$\text{Fuel electrode} : 2H_2 \rightarrow 4H+ + 4e^- \tag{1}$$

$$\text{Oxidizer electrode} : 4H^+ + 4e^- + O_2 \rightarrow 2H_2O \tag{2}$$

That is, when the fuel electrode is supplied with hydrogen gas, reaction occurs on the fuel electrode as expressed by the formula (1), generating hydrogen ions. Resulting hydrogen ions permeate (disperse) through an electrolyte) to reach the oxidizer electrode. When this takes place, if the oxidizer electrode is supplied with oxygen containing gas, such as air, reaction proceeds on the oxidizer electrode as expressed by the formula (2). Upon progress of electrode reactions on respective electrodes in the formulae (1) and (2), electromotive forces occur in the fuel cell.

By the way, the fuel cells are classified into various types depending upon a difference in electrolyte, and a polymer electrolyte fuel cell using a solid polymer membrane as an electrolyte has been known in the art. Such a polymer electrolyte fuel cell is low in cost and easy to provide miniaturization and light weight and, due to the presence of a high power density, is highly expected to be applied to a vehicle power supply.

However, in order for hydrogen ions to permeate through the solid polymer membrane in the polymer electrolyte fuel cell, a need arises for the solid polymer membrane to remain in a wet condition. To this end, an attempt has been widely undertaken to positively humidify the solid polymer membrane, serving as the electrolyte, by humidifying fuel gas and oxidizer gas to be supplied to the fuel cell, and if the amount of humidifying water or reacted product water exceeds a limit of an amount of water to be retained in the solid polymer membrane, such water constituent tends to be condensed causing a flooding phenomenon to occur with water spilling into gas flow passages. The flooding phenomenon is a phenomenon that is liable to occur when the amount of reaction product water increases and the fuel cell generates electric power at a high electric current density, and when the flooding phenomenon occurs, an electric power generating surface of an electrode is covered with water to limit reaction causing a phenomenon to occur with a supply gas flow passage being blocked to obstruct the flow of gases with a resultant difficulty in continuing to stably generate electric power.

Japanese Patent Application Laid-Open Publication No. 11-16591 and USP 5641586 propose to provide technology of addressing the above-described issue of flooding by changing over a flow passage configuration of the gas flow passages, formed on a separator, into a comb-shaped flow passage configuration.

In particular, such technology adopts, in place of using a passage configuration formed in a parallel flow passage configuration, which has heretofore been generally treated as a flow passage configuration of gas flow passages formed on the separator, that is, a configuration in which a plurality of parallel flow passages communicate with one another at a reaction gas inlet portion and outlet portion, a comb-shaped flow passage configuration wherein the gas flow passages at the supply side and the gas flow passages at the exhaust side are made separate from one another not to directly communicate with one another. This allows supply gases to forcibly pass across a gas diffusion layer to provide an ease of expelling product water and even when the fuel cell generates electric power at the high electric current density with a resultant increase in the amount of product water that would cause flooding to occur in the parallel flow passage configuration that has heretofore been generally employed, the occurrence of flooding can be effectively minimized, thereby making it possible to allow the fuel cell to generate electric power in a stable manner.

## SUMMARY OF THE INVENTION

However, upon studies conducted by the present inventors, it is conceived that with the fuel cell where the gas flow passages, formed on the separator, takes the form of the comb-shaped configuration, discharge of moisture is excessively promoted with a resultant tendency of causing a drop in a water retention rate of the solid polymer membrane to be used as the electrolyte. Under such a condition in which the water retention rate of the solid polymer membrane is lowered, electrical resistance of the electrolyte increases, resulting in a drop in output voltage and output power. Additionally, it is also considered that if the water retention rate further decreases causing a dried condition to occur, then, a situation takes place wherein the solid polymer membrane encounters an inability of functioning as the electrolyte. Particularly, the polymer electrolyte fuel cell tends to fall into such a serious condition during electric power generation at a low electric current density with less amount of reaction product water.

That is, in an event that the parallel flow passage configuration, wherein the inlet portions and the outlet portions of the plural parallel passages for reaction gases are held in mutual communication, is adopted as the flow passage configuration of the gas flow passages formed on the separator, the solid polymer membrane has a characteristic in that it is hard to be dried even under electric power generating condition at the low electric current density with less amount of product water and, at the same time, has a characteristic in that it is liable to cause the flooding phenomenon to occur during electric power generation at the high electric current density with an increased amount of product water. On the contrary, in an event that the comb-shaped flow passage configuration, wherein the supply flow passages and the exhaust flow passages for reaction gases to flow are made separate from one another not to directly communicate with one another, is adopted as the flow passage configuration of the gas flow passages formed on the separator, the solid polymer membrane has a characteristic in that it has a capability of generating electric power in a stable manner at the high electric current density with the increased amount of product water and, at the same time, has a characteristic liable to be dried during electric power generation at the low electric current density with the less amount of product water.

The present invention has been completed upon such studies conducted by the present inventors and has an object to provide polymer electrolyte fuel cell, which is able to select an optimum flow passage configuration in accordance with operating conditions, such as a condition under which electric power is generated, for effectively minimizing the occurrence of a flooding phenomenon and drying of a polymer electrolyte membrane in any kind of operating conditions to provide a capability of stably generating electric power, and its related method.

To achieve the above object, in one aspect of the present invention, a polymer electrolyte fuel cell comprises: an electric power generating cell provided with: a fuel electrode; an oxidizer electrode; a polymer electrolyte membrane sandwiched between the fuel electrode and the oxidizer electrode; and a separator formed with a gas flow passage for reaction gas to be supplied to at least one of the fuel electrode and the oxidizer electrode; and a flow passage changeover mechanism changing over a configuration of the gas flow passage in accordance with an operating condition of a polymer electrolyte fuel cell.

Stated in another way, in another aspect of the present invention, a polymer electrolyte fuel cell comprises: an electric power generating cell provided with: a fuel electrode; an oxidizer electrode; a polymer electrolyte membrane sandwiched between the fuel electrode and the oxidizer electrode; and a separator formed with a gas flow passage for reaction gas to be supplied to at least one of the fuel electrode and the oxidizer electrode; and a flow passage changeover means for changing over a configuration of the gas flow passage in accordance with an operating condition of a polymer electrolyte fuel cell.

Besides, in another aspect of the present invention, a method of changing over gas flow passages of a polymer electrolyte fuel cell, which is provided with an electric power generating cell having a fuel electrode, an oxidizer electrode, a polymer electrolyte membrane sandwiched between the fuel electrode and the oxidizer electrode, and a separator formed with gas flow passage for reaction gas to be supplied to at least one of the fuel electrode and the oxidizer electrode, comprises: detecting an operating condition of a polymer electrolyte fuel cell; and changing over a configuration of the gas flow passage in accordance with the operating condition.

Other and further features, advantages, and benefits of the present invention will become more apparent from the following description taken in conjunction with the following drawings.

## BRIEF DESCRIPTION OF THE DRAWINGS

FIG. 1 is a perspective view schematically illustrating each electric power generating cell of a polymer electrolyte fuel cell in a first embodiment according to the present invention;
FIG. 2 is a perspective view of a separator for use in the polymer electrolyte fuel cell of the first embodiment;
FIG. 3 is a plan view showing a condition where a flow passage configuration of gas flow passages takes the form of a parallel flow passage configuration in the separator of the first embodiment;

FIG. 4 is a cross sectional view showing a gas communicating condition in a case where the flow passage configuration of the gas flow passages takes the form of the parallel flow passage configuration shown in FIG. 3;

FIG. 5 is a plan view showing a condition where the flow passage configuration of the gas flow passages takes the form of a so-called comb-shaped flow passage configuration in the separator of the first embodiment;

FIG. 6 is a cross sectional view showing a gas flow communicating condition where the flow passage configuration of the gas flow passages takes the form of the so-called comb-shaped flow passage configuration shown in FIG. 5;

FIG. 7 is a perspective view of typically illustrating an internal structure of the polymer electrolyte fuel cell in a second embodiment according to the present invention;

FIG. 8 is a plan view showing a condition where a flow passage configuration of gas flow passages takes the form of a parallel flow passage configuration in a separator for use in the polymer electrolyte fuel cell of the second embodiment;

FIG. 9 is a plan view showing a condition where the flow passage configuration of the gas flow passages formed takes the form of a so-called comb-shaped flow passage configuration in the separator of the second embodiment;

FIG. 10 is a plan view of a separator for use in the polymer electrolyte fuel cell in a third embodiment according to the present invention;

FIG. 11A is a cross sectional view, showing a condition in which a deformable member in the separator is deformed to be contracted in the third embodiment;

FIG. 11B is a cross sectional view showing the condition in which the deformable member in the separator is deformed to be expanded in the third embodiment;

FIG. 12 is a flowchart illustrating a sequence of purging operation of the polymer electrolyte fuel cell in a fifth embodiment according to the present invention;

FIG. 13 is a cross sectional view typically showing an appearance inside of the electric power generating cell in the polymer electrolyte fuel cell immediately after commencement of supplying reaction gases, as viewed in a direction perpendicular to a direction in which reaction gases are supplied, in a seventh embodiment according to the present invention;

FIG. 14 is a cross sectional view typically showing the appearance inside of the electric power generating cell immediately after start-up operation has been executed, as viewed in a direction along a direction in which reaction gases are supplied, in the seventh embodiment; and

FIG. 15 is a flowchart illustrating a sequence of start-up operation of the polymer electrolyte fuel cell in the seventh embodiment.

## DETAILED DESCRIPTION OF THE PREFERRED EMBODIMENTS

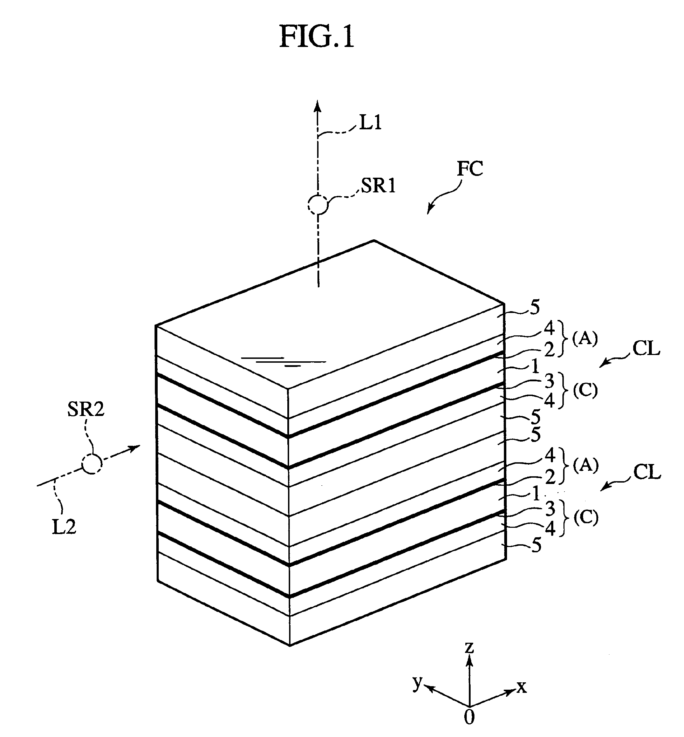

Hereinafter, a polymer electrolyte fuel cell and its related method of each of various embodiments of the present invention are described in detail with reference to FIGS. 1 to 15 of the accompanying drawings.

(First Embodiment)

Now, a first embodiment according to the present invention is described in detail with reference to FIGS. 1 to 6.

FIG. 1 is a perspective view schematically illustrating a structure of each electric power generating cell CL that forms one unit of the polymer electrolyte fuel cell FC of the presently filed embodiment. The polymer electrolyte fuel cell FC is comprised of multiple stacks of electric power generating cells CL laminated in a stack direction (z-direction), with only two electric power generating cells CL being typically shown in the drawing figure for the sake of convenience. Incidentally, although the presently filed embodiment will be described in conjunction with an example wherein a gas diffusion layer 4 forms a component part separate from electrodes 2, 3 each of which carries catalyst, it doesn't matter if these component parts may be combined to provide a sense of electrodes A, C.

As shown in FIG. 1, the electric power generating cell CL is comprised of an electrolyte membrane 1 composed of a solid polymer membrane, two electrode layers, that is, an anode (fuel electrode) 2 and a cathode (oxidizer electrode) 3 disposed on both surfaces of the electrolyte membrane 1 so as to sandwich the same, and a separator 5 that forms a partition wall between the adjacent cells CL such that the anode 2 and cathode 3 are interleaved. Also, the anode 2 includes a catalytic section disposed closer to the solid polymer membrane 1 and the cathode 3 includes a catalytic section disposed closer to the solid polymer membrane 1.

Disposed on the anode 2 at a side closer to the separator 5 is a gas diffusion layer 4 that is located so as to cover a surface, which is perpendicular to the stack direction, of the anode 2, and disposed on the cathode 3 at a side closer to the separator 5 is another gas diffusion layer 4 that is located so as to cover the surface, perpendicular to the stack direction, of the cathode 3.

The electrolyte membrane 1 is composed of an ion (proton) conductive solid polymer membrane, such as a fluorocarbon resin family ion exchange membrane, which serves as an ion conductive electrolyte with saturated water.

The two electrodes 2, 3 disposed on both surfaces of the electrolyte membrane 1 include carbon cloths or carbon papers, respectively, each of which contains catalyst, composed of platinum or platinum and other metals, with the surface carrying catalyst being kept in contact with the electrolyte membrane 1.

In particular, the anode 2 is supplied with hydrogen gas to cause hydrogen ions and electrons to dissociate from one another to allow the hydrogen ions to permeate through the electrolyte membrane 1 while the electrons pass through an external circuit for thereby generating electric power whereupon the hydrogen ions and electrons move to the cathode 3, respectively. On the other hand, reaction occurs on the cathode 3 between oxygen in air, supplied to the cathode 3, and the hydrogen ions, moving through the electrolyte membrane 1, and the electrons passing through the external circuit, thereby creating water.

Each gas diffusion layer 4 has a gas diffusion effect, and the gas diffusion layer, 4 of the anode 2 and the cathode 3 admit hydrogen gas and air to be supplied to respective catalytic sections.

The separator 5 not only forms the partition wall between the adjacent cells CL but also has a function of a current collector and a function of gas flow passages through which reaction gases (hydrogen gas and air) flow and, to this end, is made of a dense carbon material that is gas impermeable. And, formed on one surface or both surfaces of the separator are a large number of ribs to ensure the formation of gas flow passages for hydrogen gas and air to flow. Hydrogen gas and air are supplied from gas inlets formed in the separator 5, respectively, and then pass through the gas flow passages defined by the ribs to be exhausted from the gas outlet. In some cases, it doesn't matter if the separator 5 is commonly used for the adjacent cells CL.

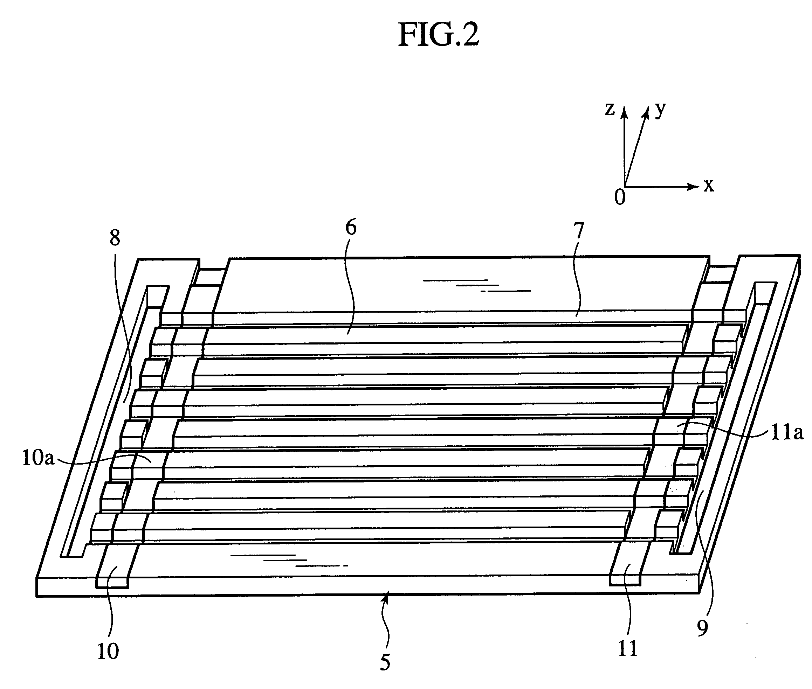

FIG. 2 is a perspective view illustrating a schematic configuration of the separator 5.

As shown in FIG. 2, a plurality of ribs 6 are formed on the separator 5 in parallel to one another with a predetermined distance are plural ribs 6, forming concave portions between associated ribs 6 to serves as parallel flow passage portions 7, of the gas flow path, to be parallel with respect to one another. The rib 6 is so designed that a length (width), in a y-direction, of the rib 6 equals a length (width), in the y-direction, of each parallel flow passage portion 7 forming the concave portion between the associated ribs 6.

Formed on both ends of the separator 5 as through-holes that are perforated in the stack direction of the separator 5 are a gas supply manifold 8 for permitting gas to be supplied to the parallel flow passage portions 7 of such gas flow path and a gas exhaust manifold 9 for permitting gas to be exhausted from the parallel flow passage portions 7. The gas supply manifold 8 and the gas exhaust manifold 9 are formed in elongated through-holes that extend in a direction perpendicular to the respective parallel flow passage portions 7 so as to communicate with whole parallel flow passage portions 7.

Further, a gas-supply-side separator movable section 10 and a gas-exhaust-side separator movable section 11 are disposed in the vicinity of the gas supply manifold 8 and the gas exhaust manifold 9 of the separator 5, respectively, as discrete component parts separate from a body portion of the separator 5. The gas-supply-side separator movable section 10 and the gas-exhaust-side separator movable section 11 include protruding portions 10a, 11a, respectively, with substantially the same width (a length in the y-direction) as that of the rib 6 and the parallel flow passage portions 7, which are located in a predetermined distance such that they are alternately located with respect to the rib 6 and the parallel flow passage portion 7.

Accordingly, sliding the gas-supply-side separator movable section 10 and the gas-exhaust-side separator movable section 11 on the surface of the separator 5 in a direction perpendicular to the parallel flow passage portions 7 enables inlet portions or outlet portions, for reaction gases to pass, of the parallel flow passage portions 7 to be selectively closed.

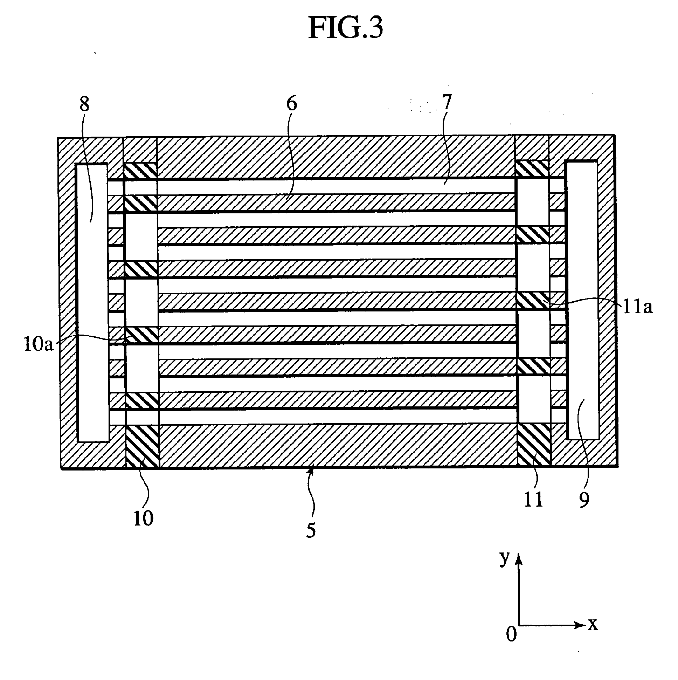

FIG. 3 is a plan view of the separator 5 shown in FIG. 2 and shows a parallel flow passage configuration, that is, a status in which the plural parallel flow passage portions 7 form the gas flow passages with a structure wherein the inlet portions and the outlet portions, for reaction gases to pass, mutually communicate with one another. Incidentally, for the sake of better understanding, relevant component parts are marked with diagonal lines.

As shown in FIG. 3, under such a condition, the gas-supply-side separator movable section 10 and the gas-exhaust-side separator movable section 11 are caused to slide downward in FIG. 3 to a position where the protruding portions 10a, 11a are brought into alignment with the respective ribs 6 to permit the gas flow passages to remain in a structure wherein the plural parallel flow passage portions 7 are brought into direct communication with one another at the inlet portion and the outlet portion for reaction gases, thereby forming the gas flow passages in the parallel flow passage configuration.

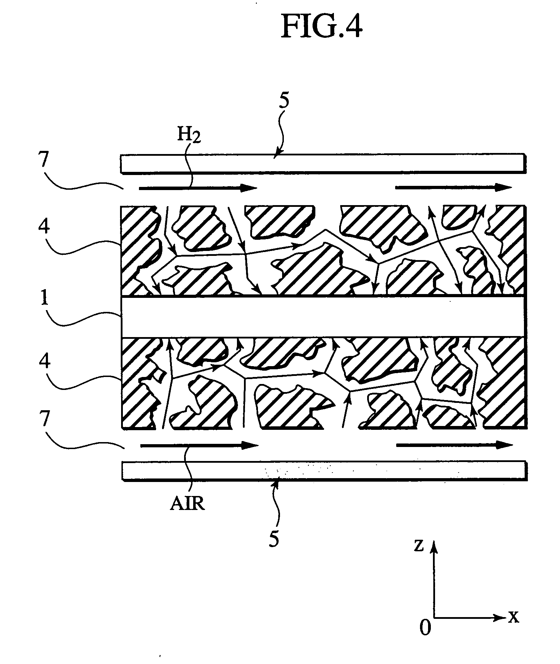

FIG. 4 is a cross sectional view illustrating how gases distribute in the separator 5 under a condition where the flow passage configuration of the gas flow passages takes the form of the parallel flow passage configuration as shown in FIG. 3, with the anode 2 and the cathode 3, each carrying thereon catalyst, being omitted from the drawing figure.

As shown in FIG. 4, under such a condition, hydrogen gas and air forming reaction gases flow from the parallel flow passage portions 7 of the gas flow passages into the associated gas diffusion layers 4 formed on the respective electrodes 2, 3 due to diffusion effects and finally arrive at the electrolyte layer 1 to contribute to electric power generating reaction. With these gas flow passages in the parallel flow passage configuration, the electrolyte 1 is hard to be dried and, on the other hand, water droplets are liable to accumulate in voids of the gas diffusion layers 4 and, in such case, reaction gases are blocked from diffusing in the gas diffusion layers 4 to cause a flooding phenomenon to occur with a tendency of deterioration in electric power generating performance.

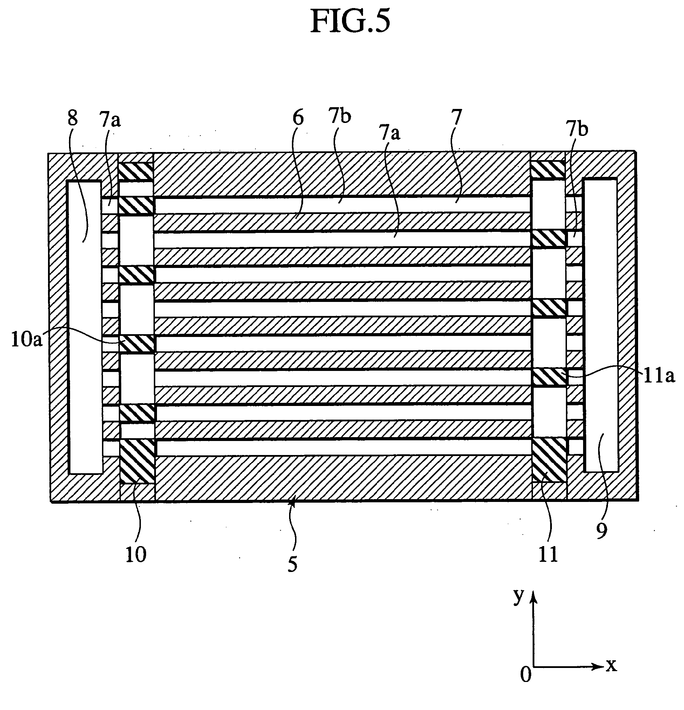

FIG. 5 is a plan view of the separator 5 shown in FIG. 2 and shows a condition wherein the flow passage configuration of the gas flow passages is not merely formed in the parallel flow passage configuration but formed in a so-called comb-shaped flow passage configuration. Incidentally, for the sake of convenience in understanding, respective relevant component parts are marked with diagonal lines.

As shown in FIG. 5, if the gas-supply-side separator movable section 10 and the gas-exhaust-side separator movable section 11 are actuated to move from the position shown in FIG. 3 upward (in a positive direction on a y-axis), the gas flow passages can be changed over to a condition shown in FIG 5.

Here, if the gas-supply-side separator movable section 10 and the gas-exhaust-side separator movable section 11 are shifted to move upward in the drawing figure, the respective parallel flow passage portions 7 are arranged such that the protruding portions 10a, 11a of the gas-supply-side separator movable section 10 and the gas-exhaust-side separator movable section 11 alternately block the relevant inlet portion and the relevant outlet portion, for reaction gases to flow, of the respective parallel flow passage portions 7 in order not to cause the respective parallel flow passage portions 7 to be brought into direct communication with one another at the inlet and the outlet portion for reaction gases to flow. This allows the parallel flow passage portion 7, in fluid communication with the gas-supply manifold 8, and the parallel flow passage portion 7 in fluid communication with the gas-exhaust manifold 9 to be alternately located, thereby forming gas flow passages in a comb-shaped flow passage configuration under a condition where the adjacent parallel flow passage portions 7 are shut off from one another.

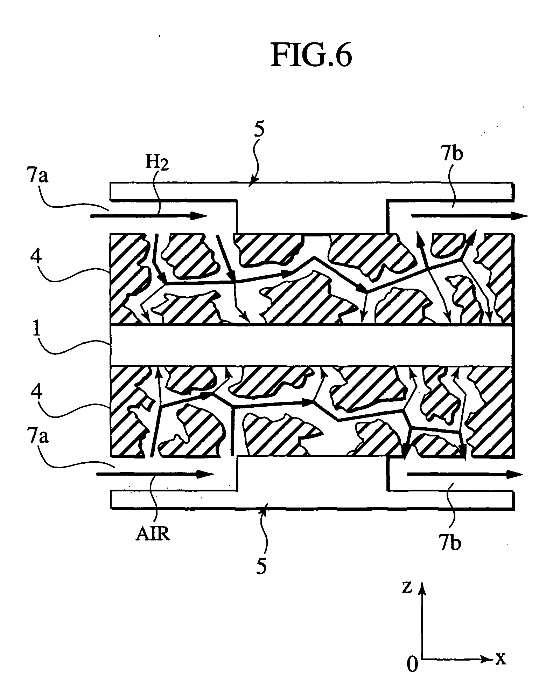

FIG. 6 is a cross sectional view illustrating how gasses distributes through the separator 5 in an event that the gas flow passage configuration of the gas flow passages shown in FIG. 2 is rendered to fall in the comb-shaped flow passage configuration, with the anode 2 and the cathode 3, each carrying thereon catalyst, being omitted from the drawing figure.

As shown in FIG. 6, with the gas flow passages formed in the comb-shaped flow passage configuration shown in FIG. 5, hydrogen gas and air forming reaction gases flow from gas-supply side parallel flow passage portions 7a (parallel gas flow passage portions 7 in fluid communication with the gas-supply manifold 8) into the associated gas diffusion layers 4 due to advection effect and are exhausted from the gas diffusion layers 4 into gas-exhaust side parallel flow passage portions 7b (parallel flow passage portions 7 in fluid communication with the gas-exhaust manifold 9). Hydrogen gas and air penetrate through the gas diffusion layers 4 to the electrolyte 1 due to diffusion effect.

Therefore, the gas flow passages with such a comb-shaped flow passage configuration has an advantageous effect in that a series of gas streams flowing from the gas-supply side parallel flow passage portions 7a to the gas diffusion layer 4 are propelled due to advection effect with a resultant advantage of discharging water droplets, remaining in the gas diffusion layer 4, to the gas exhaust side together with the gas streams.

As set forth above, although the gas flow passages with the parallel flow passage configuration has an increased efficiency during electric power generation at a low electric current density due to the presence of an increased water holding property, the gas flow passages tend to be liable to encounter flooding at a high electric current density. On the contrary, although the gas flow passages with the comb-shaped flow passage configuration is liable to cause the membrane to dry at the low electric current density due to the presence of an increased drainage ability, flooding is hard to occur even at the high electric current density with resultant efficiency in operation. Therefore, the presently filed embodiment contemplates to adopt a structure to allow the gas-supply-side separator movable section 10 and the gas-exhaust-side separator movable section 11 to be shifted in accordance with various operating conditions, such as a condition under which the polymer electrolyte fuel cell operates to generate electric power, to cause the gas flow passages to take an optimum flow passage configuration.

In actual practice, the polymer electrolyte fuel cell has an electrical line L1 that includes an electric power generating status detector SR1 for detecting an electric power generating condition, that is, a resulting electric current density particularly as shown in FIG. 1, whereupon depending upon detected result of the electric power generating status detector, operation is executed to select the parallel flow passage configuration, shown in FIG. 3, during electric power generation at the low electric current density while selecting the comb-shaped flow passage configuration, shown in FIG. 5, during electric power generation at the high electric current density. This enables improvement over an efficiency to be achieved during electric power generation both at the high and low electric current densities.

In an alternative, the polymer electrolyte fuel cell may be arranged so as to include a moisture content detector SR2 that detects the amount of humidity of reaction gases passing across a gas flow passage L2 or the amount of liquid moisture passing across the gas flow passages, particularly as shown in FIG. 1, whereupon detected result of the moisture content detector SR2 may be used as a reference for selecting the flow passage configuration of the gas flow passages. When humidity of reaction gases passing across the gas flow passages increases or when a large quantity of liquid moisture is accumulated in the gas flow passages, operation is executed to select the comb-shaped flow passage configuration with improved water drainage property whereas when humidity of reaction gases passing across the gas flow passages is low or when almost no liquid moisture is accumulated in the gas flow passages, operation is executed to select the parallel flow passage configuration with improved water holding property. This allows the flow passage configurations to be selectively used in a way to have the best of advantages of both the flow passage configurations depending upon a wet condition of gases, making it possible to achieve electric power generation at a high efficiency.

Incidentally, the electric power generating status detector SR1 and the moisture content detector SR2 may be possible to be used in combination if desired.

With the polymer electrolyte fuel cell of the presently filed embodiment with such a structure mentioned above, the provision of a mechanism to change over the flow passage configuration of the gas flow passages makes it possible to select an optimum flow passage configuration in accordance with the operating conditions, such as the electric power generating condition or internal condition, of the fuel cell. More particularly, either one of the parallel flow passage configuration, shown in FIG. 3, and the comb-shaped flow passage configuration, shown in FIG. 5, can be selectively adopted as a pertinent flow passage configuration depending upon the operating conditions of the fuel cell, enabling the fuel cell to efficiently generate electric power with the pertinent flow passage configuration depending upon respective characteristics.

Further, with the polymer electrolyte fuel cell of the presently filed embodiment, the provision of the electric power generating status detector for detecting the electric power generating status enables the detected result to be used as the reference for selecting the flow passage configuration of the gas flow passages, making it possible to appropriately select the optimum gas flow passage configuration depending upon the electric power generating condition. Since the product moisture content is low during the low electric current density and it is desirable for reducing the amount of moisture to be discharged, the parallel flow passage configuration as shown in FIG. 3 is desirably selected and, during the electric power generating mode at the high electric current density, it is preferable for the moisture discharge quantity to be increased in order not to cause flooding with respect to the amount of product water and, to this end, operation is executed to select the comb-shaped flow passage configuration as shown in FIG. 5. This enables the advantages of both the flow passage configurations to be selectively utilized, making it possible to generate electric power at a high efficiency within a wide range of electric current density.

Furthermore, with the polymer electrolyte fuel cell of the presently filed embodiment, the provision of the moisture content detector, which detects humidity of reaction gases passing through the gas flow passages or the amount of liquid moisture passing through the gas flow passages to allow the detected result to be used as the reference based on which the gas flow passage configuration of the gas flow passages is selected, makes it possible to appropriately select the optimum gas flow passage configuration in accordance with the internal condition. When humidity of reaction gases inside the gas flow passages is high or when a large amount of liquid moisture is present, the comb-shaped flow passage configuration with the increased water drainage property is selected and, in contrast, when humidity of reaction gases inside the gas flow passages is low or when almost no liquid moisture is present, the parallel flow passage configuration with the increased water holding property is selected. This enables the advantages of both the flow passage configurations to be selectively utilized, also making it possible to generate electric power at a high efficiency within a wide range of electric current density.

(Second Embodiment)

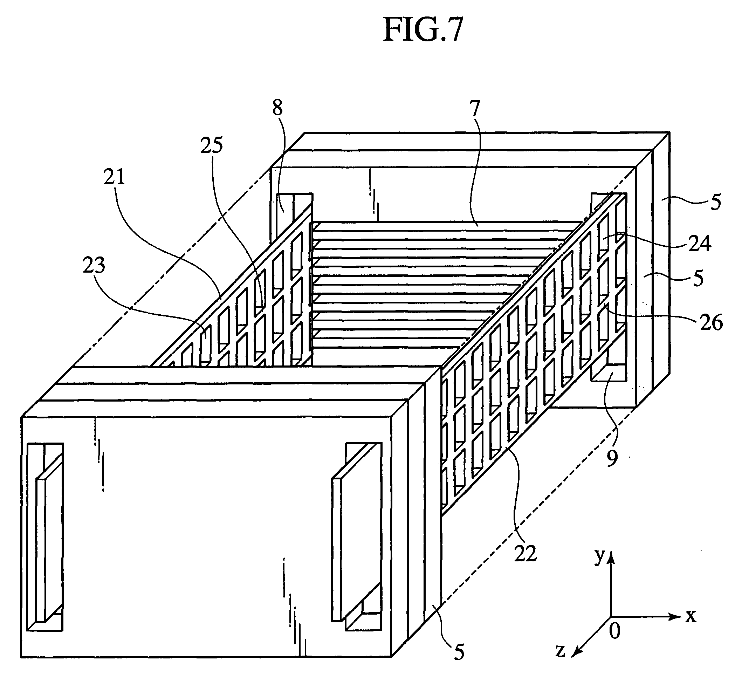

Next, a second embodiment according to the present invention is described below in detail mainly with reference to FIGS. 7 to 9. The presently filed embodiment takes a fundamental structure similar to that of the polymer electrolyte fuel cell of the first embodiment but differs from the first embodiment in the mechanism for changing over the flow passage configuration of the gas flow passages. Hereinafter, while description is made focusing on such a differential point, the same component parts bear like reference numerals and description is made in a suitably omitted or simplified form.

FIG. 7 is a perspective view typically illustrating an internal structure of an essential part of a polymer electrolyte fuel cell of the presently filed embodiment and mainly shows the separator 5 and movable members 21, 22, with other component elements being omitted.

As shown in FIG. 7, the gas-supply manifold 8 and the gas-exhaust manifold 9 are thoroughly formed through the respective separators 5, each forming a partition wall between adjacent electric power generating cells, so as to extend in the stack direction (z-direction) as set forth above and, with the presently filed embodiment, the supply-side-manifold movable member 21 is inserted as one unit through the gas-supply manifold 8 across the respective separators 5 and the exhaust-side-manifold movable member 22 is inserted as one unit through the gas-exhaust manifold 9 across the respective separators 5, with each movable member being movable in the y-direction.

Formed on these movable members 21, 22 at positions corresponding to the respective separators 5, respectively, are through-bores 23, 24, and reaction gases are introduced through the through-bores 23, formed in the supply-side-manifold movable member 21, into the parallel flow passage portions 7 whereupon reaction gases are exhausted through the through-bores 24, formed in the exhaust-side-manifold movable member 22 into the gas-exhaust manifold 9.

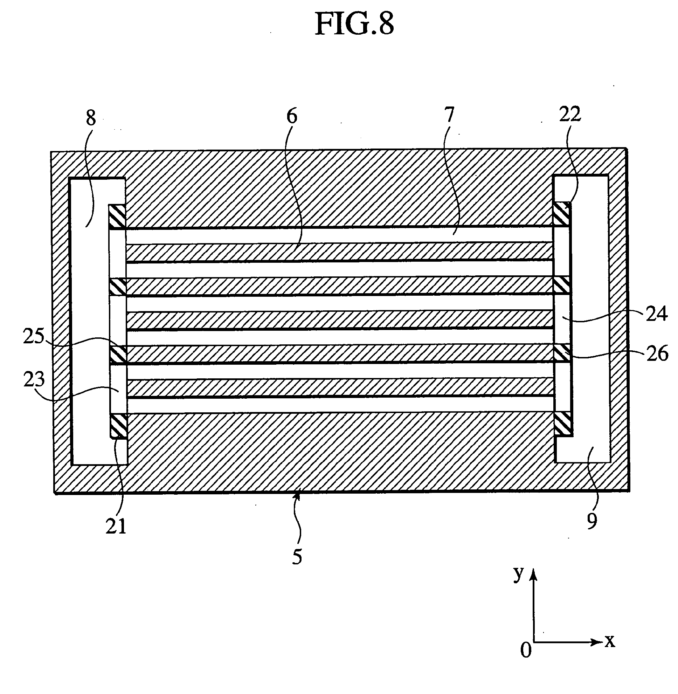

FIG. 8 is a plan view focusing on one sheet of separator 5 forming the polymer electrolyte fuel cell shown in FIG. 7. Incidentally, for the sake of better understanding, relevant component parts are marked with diagonal lines.

As shown in FIG. 8, the supply-side-manifold movable member 21 and the exhaust-side-manifold movable member 22 assume the respective positions wherein partition segments 25, 26 between the through-bores 23, 24 are aligned with the associated rib 6 to allow the respective parallel flow passage portions 7 to be brought into direct communication with the gas-supply manifold 8 and the gas-exhaust manifold 9 to form gas flow passages in a parallel flow passage configuration.

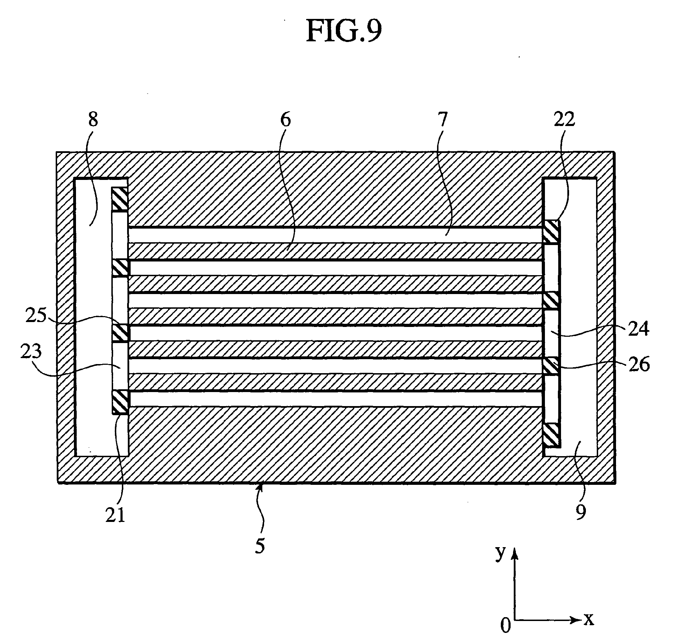

FIG. 9 is a plan view focusing on the separator 5 in which the supply-side-manifold movable member 21 and the exhaust-side-manifold movable member 22 are actuated such that the supply-side-manifold movable member 21 is moved upward (in a positive direction along the y-direction) from the position shown in FIG. 8 and the exhaust-side-manifold movable member 22 is moved downward (in a negative direction along the y-direction) from the position shown in FIG. 8 for thereby changing over the gas flow passage configuration. Incidentally, for the sake of better understanding, relevant component parts are marked with diagonal lines.

As shown in FIG. 9, moving the supply-side-manifold movable member 21 and the exhaust-side-manifold movable member 22 in opposite directions along the y-axis, respectively, provides the form of a structure wherein the partition segments 25, 26 between the through-bores 23, 24 alternately shut off the inlet portions and the outlet portions of the parallel flow passage portions for reaction gases to flow. This allows the parallel flow passage portions 7 in fluid communication with the gas-supply manifold 8 and the parallel flow passage portions 7 in fluid communication with the gas-exhaust manifold 9 are alternately located, thereby forming the gas flow passages under the comb-shaped flow passage configuration with the flow passages being separate from one another.

With the structure of the presently filed embodiment set forth above, by operatively moving the supply-side-manifold movable member 21, inserted to the gas-supply manifold 8 of the respective separators 5, and the exhaust-side-manifold movable member 22 inserted to the gas-exhaust manifold 9 of the respective separators 5, respectively, the flow passage configuration of the gas flow passages can be changed over in the same manner as in the previous first embodiment.

Accordingly, even with the polymer electrolyte fuel cell of the presently filed embodiment, it becomes possible to select an optimum flow passage configuration of the gas flow passages in accordance with the operating conditions such as electric power generating conditions and internal conditions, making it possible for the fuel cell to efficiently generate electric power with the optimum flow passage configuration to meet respective characteristics.

Further, with the presently filed embodiment, the flow passage configuration of the gas flow passages of the respective separators 5 can be changed over at one time by operatively moving the supply-side-manifold movable member 21 and the exhaust-side-manifold movable member 22 inserted through the entire separators 5 as respective units, making it possible to realize a simplified structure and easy-to-use operation.

Incidentally, no need arises for the supply-side-manifold movable member 21 and the exhaust-side-manifold movable member 22 to be necessarily realized in respective single units, and individual supply-side-manifold movable member 21 and exhaust-side-manifold movable member 22 may be provided for each electric power generating cell or each aggregative unit of one or more electric power generating cells to allow the individual supply-side-manifold movable member 21 and exhaust-side-manifold movable member 22 to be operatively actuated, respectively, for thereby changing over the flow passage configuration of the gas flow passages of the associated separators 5.

(Third Embodiment)

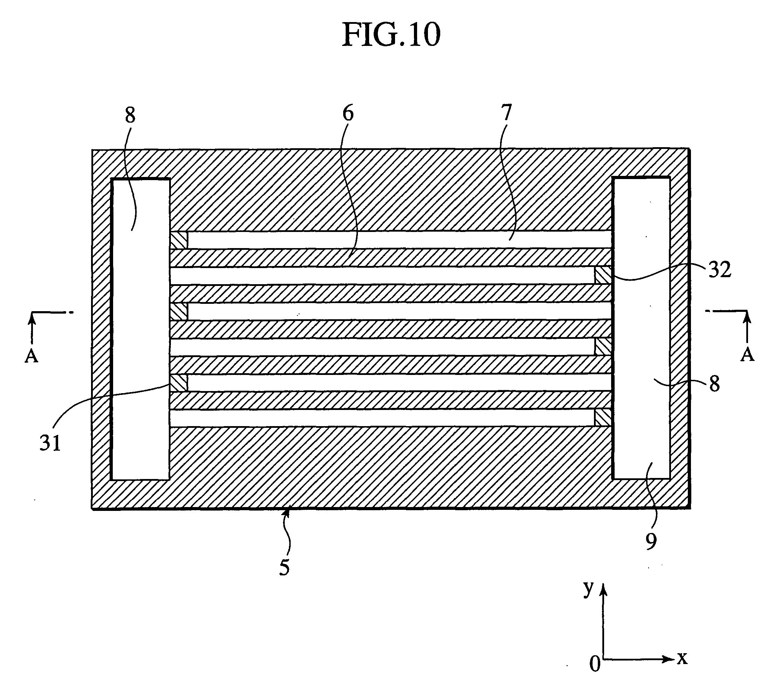

Next, a third embodiment of the present invention is described below in detail mainly with reference to FIGS. 10 to 11B. The presently filed embodiment takes a fundamental structure similar to that of the polymer electrolyte fuel cell of the first embodiment but differs from the first embodiment in a mechanism changing over the flow passage configuration of the gas flow passages. Hereinafter, description is made focusing on such a differential point, with the same component parts bearing like reference numerals while description is made in a suitably omitted or simplified form.

FIG. 10 is a plan view of the separator 5 for use in the polymer electrolyte fuel cell of the presently filed embodiment. Incidentally, for the sake of better understanding, relevant component parts are marked with diagonal lines.

As shown in FIG. 10, also, with the presently filed embodiment, the separator 5 is thoroughly formed with the gas-supply manifold 8 and the gas-exhaust manifold 9 to supply or expel reaction gases to and from the parallel flow passage portions 7. And, gas-supply-side deformable members 31 are alternately disposed in the parallel flow passage portions 7, at positions close proximity to the gas-supply manifold 8, to form one group of the plural parallel flow passage portions 7, and gas-supply-side deformable members 32 are alternately disposed in the parallel flow passage portions 7, at positions close proximity to the gas-exhaust manifold 9, to form the other group of the plural parallel flow passage portions 7.

The gas-supply-side deformable members 31 and gas-exhaust side deformable members 32 are composed of material, which is expandable and deformable upon absorbing liquid, typically, water, and are embedded in lower areas of the associated parallel flow passage portions 7 such that, during non-deforming period, flow passage surfaces are made flat and smooth.

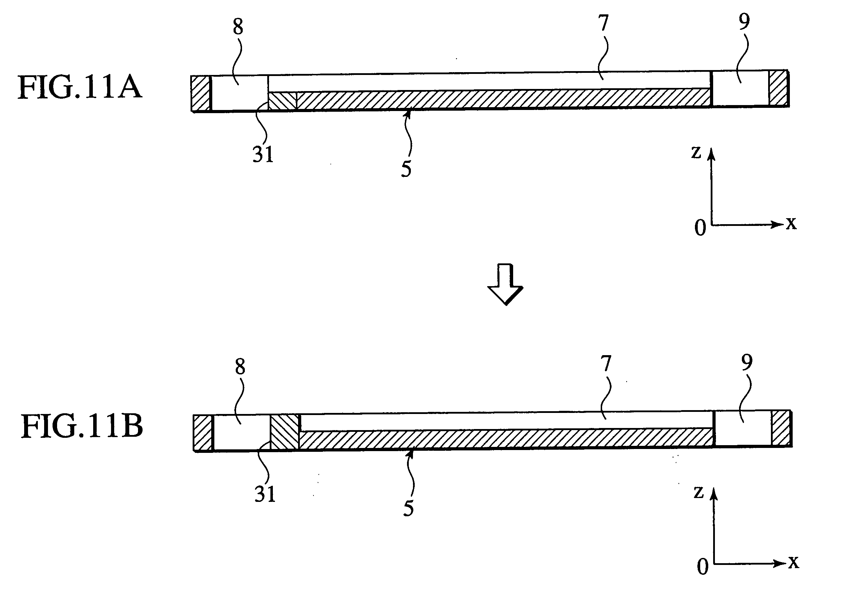

FIG. 11A is a cross sectional view illustrating a deformed condition of the deformable member 31 in the separator 5 and shows a condition wherein the deformable member is contracted, and FIG. 11B is a cross sectional view illustrating the deformed condition of the deformable member 31 in the separator 5 and shows a condition wherein the deformable member is expanded and deformed. Incidentally, the deformable member 32 operates in the same manner as the deformable member 31 and, hence, description of the same is herein omitted.

As shown in FIG. 11A, in case where no liquid moisture is contained in reaction gases that pass through the parallel flow passage portions 7, the deformable member 31 has an upper surface coplanar with a bottom surface of the parallel flow passage portion 7 not to block the flow of reaction gases. Consequently, such a condition results in the formation of gas flow passages in a parallel flow passage configuration.

On the contrary, as shown in FIG. 11B, in case where liquid moisture is contained in reaction gases passing through the parallel flow passage portion 7, the deformable member 31 absorbs resulting liquid moisture to expand and deform, thereby blocking the parallel flow passage portion 7 to interrupt the flow of reaction gases.

Thus, as a result of the deformable members 31, 32 absorbing liquid moisture to expand and deform, inlet portions and outlet portions of the parallel flow passage portions 7 for reaction gases are alternately blocked, resulting in the formation of gas flow passages in a comb-shaped flow passage configuration. Incidentally, the deformable members 31, 32 may be made of material that is expandable and deformable in dependence upon a humidity of reaction gases and, in such case, it is possible for the gas flow passages to be altered in configuration depending upon humidity of reaction gases.

With the presently filed embodiment described above, the presence of the deformable members 31, 32 disposed in the parallel flow passage portions 7 of the separator 5 enables the flow passage configuration of the gas flow passages to be altered in the same way as those of the first and second embodiments set forth above.

Accordingly, even with the polymer electrolyte fuel cell of the presently filed embodiment, it becomes possible to select an optimum flow passage configuration of the gas flow passages in accordance with the operating conditions such as the electric power generating conditions and the internal conditions, making it possible for the fuel cell to efficiently generate electric power with the optimum flow passage configuration to meet respective characteristics.

Further, the presently filed embodiment is able to realize alteration of the flow passage configuration of the gas flow passages without particular operation such as shifting movement of the movable members, resulting in an extremely high effectiveness in view of operability.


(Fourth Embodiment)


Next, a fourth embodiment of the present invention is described in detail.

The presently filed embodiment contemplates to efficiently perform purging operation by employing the structures of the first to third embodiments described above such that when stopping operation to generate electric power typically such as the shut-down of the polymer electrolyte fuel cell, the gas flow passages of respective separators 5 of a polymer electrolyte fuel cell take an optimum flow passage configuration.

When stopping operation of the polymer electrolyte fuel cell to generate electric power, in normal practice, purging operation is carried out to supply inactive gas, such as nitrogen, or reaction gases (hereinafter referred to as purge gas) to the fuel cell for a predetermined time interval for the purpose of expelling residual moisture from delivery conduits and an interior of the fuel cell. When carrying out such purging operation in such a way, if the gas flow passages of the respective separators 5 of the polymer electrolyte fuel cell takes the form of the parallel flow passage configuration as shown in FIGS. 3 and 4, most of purge gas introduced into the polymer electrolyte fuel cell pass from the gas-supply manifold 8 to the gas-exhaust manifold 9 through the parallel flow passage portions 7 as they are and, hence, discharging of liquid moisture present in carbon carriers, which particularly forms the gas diffusion layers 4 and electrodes 2, 3, relies only on diffusion of steam, resulting in a tendency with liquid moisture being discharged within an extended time period to cause a deteriorated efficiency in operation.

Therefore, with the presently filed embodiment, in case where during the execution of purging operation when interrupting electric power generation, the gas flow passages of the respective separators 5 of the polymer electrolyte fuel cell take the form of the parallel flow passage configuration, actuating the flow passage configuration shift mechanism as described in the above each embodiment, that is, the gas-supply-side separator movable member 10 and the gas-exhaust-side separator movable member 11, the supply-side-manifold movable member 21 and the exhaust-side-manifold movable member 22, and the gas-supply-side deformable member 31 and the gas-exhaust-side deformable member 32 renders the gas flow passages of the respective separators 5 to be shifted into the comb-shaped flow passage configuration as shown in FIGS. 5, 6, 9 and 11B.

This allows purge gas, introduced into the polymer electrolyte fuel cell, to flow into the gas diffusion layer 4, and the flow of purge gas enables liquid moisture, present in the gas diffusion layer 4, to be expelled under a liquid status at a high efficiency.

Incidentally, a need arises for moisture, present in the carbon carriers that form the electrodes 2, 3, to be discharged through steam dispersion even in case where the gas flow passages of the separators 5 take the form of the parallel flow passage configuration and, because purge gas flows through the gas diffusion layer 4 due to convection in case where the gas flow passages of the separators 5 take the form of the comb-shaped flow passage configuration, a distance between a convection area and the carbon carrier is shorter than that attained in case where the parallel flow passage configuration, resulting in improvement over a moisture removing efficiency at that rate due to dispersion.

The effect of improvement over the purging efficiency of the presently filed embodiment set forth above is particularly effective for a case where the polymer electrolyte fuel cell is adopted as a fuel cell for a moving object fuel cell system with a probability being left derelict under an environment where during stop of electric power generation, moisture tends to freeze. That is, if the fuel cell is left derelict under the environment below the freezing point under a situation where moisture remains in the gas diffusion layer 4 and a porous body such as the carbon carrier, moisture freezes with a resultant tendency of the occurrence of an inability of supplying reaction gases to the electrodes (anode and cathode) 2, 3 at the re-start-up. Also, it is conceivable that frozen moisture expands to adversely and structurally affect on the gas diffusion layer 4 and the carbon carriers forming the electrodes 2, 3. To overcome this phenomenon, although there is a need for efficiently removing moisture to a minimum, shifting the gas flow passages of the separators 5 into the comb-shaped flow passage configuration to execute purging operation, like in the presently filed embodiment, makes it possible to realize removal of moisture at a high efficiency.

(Fifth Embodiment)

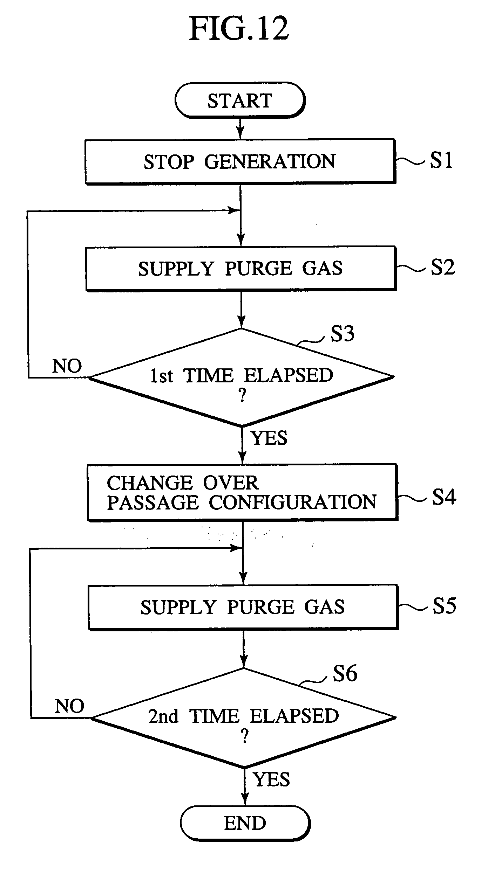

Next, a fifth embodiment of the present invention is described in detail mainly with reference to FIG. 12.

The presently filed embodiment contemplates for gas flow passages of the separators 5 of a polymer electrolyte fuel cell to take an optimum flow passage configuration through application of the structures of the first to third embodiments described above during purging operation to be executed when interrupting operation to generate electric power like in the fourth embodiment, and further concrete operational sequence is described below.

That is, with the presently filed embodiment, when changing over the gas flow passages during purging operation, by sequentially executing supplying purge gas under a status where the gas flow passages of the separators 5 remain under the parallel flow passage configuration and supplying purge gas under a status where the gas flow passages of the separators 5 remain under the comb-shaped flow passage configuration, purging operation enables moisture to be removed at a further improved efficiency.

In general, typically as shown in FIGS. 5 and 6, with the comb-shaped flow passage configuration where the gas-supply-side parallel flow passage portions 7a (parallel flow passage portions 7 in fluid communication with the gas-supply manifold 8) and the gas-exhaust-side parallel flow passage portions 7b (parallel flow passage portions 7 in fluid communication with the gas-exhaust manifold 9) do not communicate with one another, liquid moisture accumulates in dead ends of the gas-supply-side parallel flow passage portions 7a, tending to cause a difficulty in removing such accumulated liquid moisture.

Thus, in case where liquid moisture accumulates in the dead ends of the gas-supply side parallel flow passage portions 7a, reaction gases can be hardly supplied to such areas, causing remarkable deterioration in an electric power generating efficiency. Moreover, during purging operation at the stop of electric power generation, purge gas can not be supplied to proximities of the areas in which liquid moisture accumulates and, hence, it is hard to remove moisture remaining in the gas diffusion layer 4 and the carbon carriers forming the electrodes 2, 3.

If the polymer electrolyte fuel cell is left derelict under the environment below the freezing point, a probability occurs wherein structural breakdown takes place in the gas diffusion layer 4 and the carbon carriers forming the electrodes 2, 3 as described above with reference to the fourth embodiment.

Therefore, with the presently filed embodiment, it is contemplated that the flow passage configuration changeover mechanism is actuated for sequentially carrying out supplying purge gas with the parallel flow passage configuration and supplying purge gas with the comb-shaped flow passage configuration to achieve purging operation at a higher efficiency.

Now, a basic sequence of purging operation in the presently filed embodiment is briefly described below with reference to a flowchart shown in FIG. 12. Incidentally, here, description is made of an exemplary case wherein electric power generating operation of the polymer electrolyte fuel cell is stopped under a situation where the gas flow passages of the separators 5 assume the parallel flow passage configuration. Also, such operation is executed by a controller, which is not shown, of a fuel cell system involving the polymer electrolyte fuel cell.

As shown in FIG. 12, first, if the polymer electrolyte fuel cell stops to generate electric power (step S1), supply of purge gas is commenced (step S2) under a situation where the gas flow passages of the separators 5 assume the parallel flow passage configuration. Purge gas is supplied under such a parallel flow passage configuration until a first predetermined time interval elapses and due to such purging operation, moisture remaining in the parallel flow passage portions 7 is removed. Incidentally, the first predetermined time interval may suffice to be preliminarily determined by obtaining time, available to surely remove moisture accumulating in the parallel flow passage portions 7, through experimental tests conducted in accordance with a trend of increment in the amount of moisture accumulated in the parallel flow passage portions 7 and the flow rate of purge gas.

Subsequently, if it is judged that the first predetermined time interval has elapsed (step S3), the flow passage configuration changeover mechanism is actuated, and the gas flow passages of the separators 5 are changed over from the parallel flow passage configuration to the comb-shaped flow passage configuration (step S4). If in contrast, it is judged that no first predetermined time interval has elapsed (step S3), operation is routed back to step S2.

Then, in succession to operation in step S4, purge gas is supplied under a situation where the gas flow passages of the separators 5 assume the comb-shaped flow passage configuration (step S5). Supply of purge gas is continued under such a comb-shaped flow passage configuration until a second predetermined time interval elapses, whereupon permitting purge gas to forcibly flow through the gas diffusion layer 4 and the carbon carriers forming the electrodes 2, 3 enables moisture, accumulated in the gas diffusion layer 4 and the carbon carriers forming the electrodes 2, 3, to be removed. Incidentally, the second predetermined time interval may suffice to be preliminarily determined by obtaining time, available to surely remove moisture accumulated in the gas diffusion layer 4 and the carbon carriers forming the electrodes 2, 3, through experimental tests conducted in accordance with a trend of increment in the amount of moisture accumulated in the gas diffusion layer 4 and the carbon carriers forming the electrodes 2, 3 and the flow rate of purge gas.

Next, if it is judged that the second predetermined time interval has elapsed (step S6), the supply of purge gas is interrupted, terminating a series of current purging operations. On the contrary, if no judgment is made that the second predetermined time interval has elapsed (step S6), operation is routed back to step S5.

As set forth above, with the structure of the presently filed embodiment, sequentially performing purging operation with the parallel flow passage configuration and purging operation with the comb-shaped flow passage configuration enables moisture to be efficiently removed for a short time period.

Incidentally, although the presently filed embodiment has been described with reference to the example where after performing purging operation under the parallel flow passage configuration, purging operation is performed in the comb-shaped flow passage configuration, an alternative may be such that after performing purging operation under the comb-shaped flow passage configuration, purging operation is performed in the parallel flow passage configuration. Also, the flow passage configuration may be changed over plural times, thereby alternately and repeatedly performing purging operation under the parallel flow passage configuration and purging operation under the comb-shaped flow passage configuration.


(Sixth Embodiment)

Next, a six embodiment of the present invention is described in detail.

The presently filed embodiment contemplates to change over the flow passage configuration of the gas flow passages of the separators 5 from the comb-shaped flow passage configuration to the parallel flow passage configuration at a predetermined timing (time interval), through application of the structures of the first to third embodiments described above, to remove residual moisture during a period in which a polymer electrolyte fuel cell operates to generate electric power under the comb-shaped flow passage configuration.

That is, as described in conjunction with the fifth embodiment, liquid moisture tends to accumulate in the dead ends of the gas-supply side parallel flow passage portions 7a under the comb-shaped flow passage configuration and it may be preferable to consider such a tendency not only for a case of performing purging operation at stoppage of electric power generation but also for electric power generating operation of the polymer electrolyte fuel cell.

Therefore, the presently filed embodiment contemplates that when the polymer electrolyte fuel cell generates electric power under a situation wherein the gas flow passages of the separators 5 assume in the comb-shaped flow passage configuration, the flow passage configuration changeover mechanism is actuated at a predetermined timing (time interval) to change over the gas flow passages of the separators 5 from the comb-shaped low passage configuration to the parallel flow passage configuration.

This enables to effectively remove moisture accumulated in the parallel flow passage portions 7, thereby making it possible to perform stable electric power generation while suppressing deterioration in an electric power generating efficiency. Incidentally, the timing at which the flow passage configuration changeover mechanism is actuated may suffice to be preliminarily determined such that a time, up to which accumulated moisture causes an adverse affect during electric power generating operation under the comb-shaped flow passage configuration, is obtained through preliminarily experimental tests and the actuation timing is set to a previous time before such adverse affect appears.

(Seventh Embodiment)

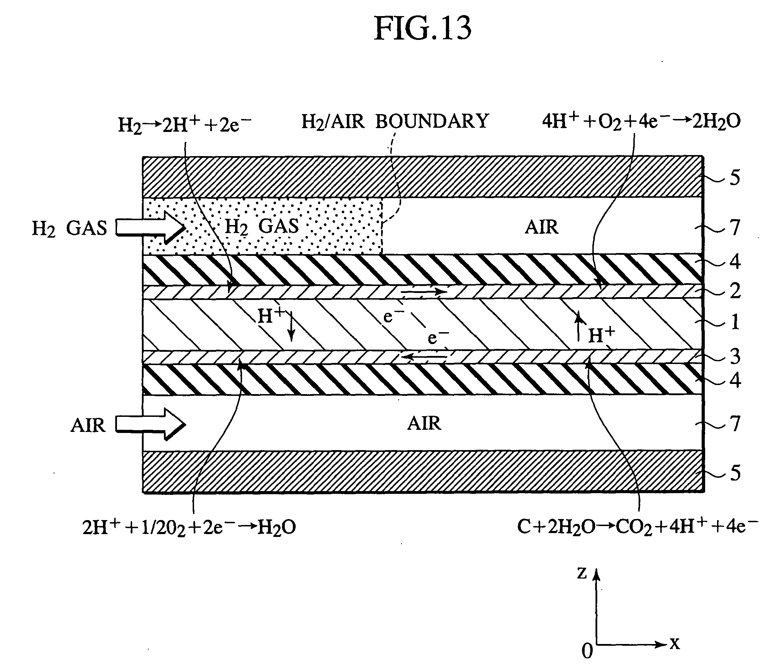

Next, a seventh embodiment of the present invention is described in detail mainly with reference to FIGS. 13 to 15.

The presently filed embodiment contemplates to effectively suppress the carbon carrier, forming the electrode on the cathode, from corrosion by compelling the flow passages of the separators 5 to assume the comb-shaped flow passage configuration, through application of the structures of the first to third embodiments described above, during start-up operation to be executed prior to compelling a polymer electrolyte fuel cell to commence electric power generation.

In case where the polymer electrolyte fuel cell is utilized as a prime power source of a moving object such an automobile, start-up and stop are repeatedly executed. At stoppage of such a fuel cell, as will be obvious, both the fuel electrode (anode) and oxidizer electrode (cathode) are left derelict under a situation where the supply of reaction gases (hydrogen gas and air) to be supplied is interrupted. Further, at stop of electric power generation, a countermeasure is undertaken to forcibly expel hydrogen gas, remaining in the fuel electrode, through purging operation as described above or to react residual gases for consumption under a condition in which the supply of reaction gases is interrupted. In any case, atmospheric air penetrates even into the fuel electrode during a stop for a long time period, resulting in a situation where the fuel electrode with residual oxygen is left derelict.

Under such a condition, that is, in case where a fuel cell system is started up under a condition wherein air is admixed into both the fuel electrode and the oxidizer electrode, a fuel electrode gas flow passage and an oxidizer electrode gas flow passage is generally exposed too the condition as shown in FIG. 13 during an initial period in which hydrogen gas begins to be supplied to the gas flow passages of the fuel electrode.

FIG. 13 is a cross sectional view typically illustrating a condition inside the electric power generating cell immediately after reaction gases begin to be supplied, as viewed in a direction perpendicular to a direction in which reaction gases are supplied.

As shown in FIG. 13, the same reaction as that achieved during normal operation takes place in an area where hydrogen gas is supplied to the fuel electrode to form water at the oxidizer electrode and reaction occurs on the oxidizer electrode opposing to an air present region of the fuel electrode at a boundary (hereinafter referred to as hydrogen/air front) between hydrogen gas and air on the fuel electrode as expressed in a formula (3) described below, causing corrosion in the carbon carrier forming the electrode 3 that is the oxidizer electrode 3. And, such corrosion causes deterioration in the electrode 3, providing cause of deterioration in subsequent performance of the fuel cell.

$$C + 2H_2O \rightarrow CO_2 + 4H^+ + 4e^- \tag{3}$$

In order to preclude deterioration of the oxidizer electrode due to the phenomenon described above, it is effective to perform start-up operation to supply hydrogen gas to the fuel electrode for a predetermined time interval prior to commencing electric power generation to compel the hydrogen/air front of the fuel electrode to pass through the gas flow passage 7 within a short period of time (for example, less than one second) to be vanished.

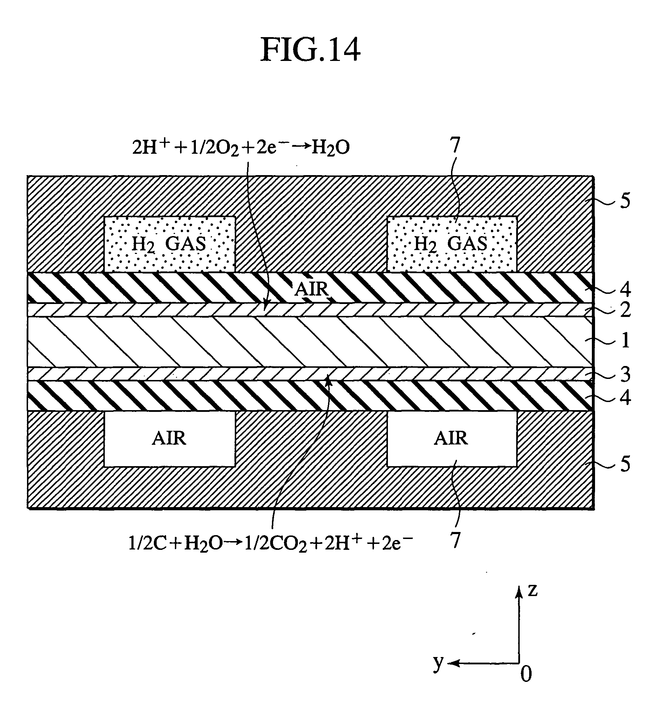

However, it is considered that even when start-up operation set forth above is executed and hydrogen gas is supplied to the fuel electrode to cause the gas flow passages of the fuel electrode to be filled with hydrogen gas, a probability occurs with a condition shown in FIG. 14.

FIG. 14 is a cross sectional view typically illustrating a condition inside of the electric power generating cell immediately after start-up, as viewed in a direction along a direction in which hydrogen gases are supplied.

As shown in FIG. 14, a probability occurs wherein immediately after start-up operation, an area in which air still remains in the gas diffusion layer 4 adjacent to the fuel electrode whereby the above-described carbon corrosion mechanism takes place until such residual air is removed due to dispersion with a resultant deterioration in the electrode 3 that serves as the oxidizer electrode.

Therefore, the presently filed embodiment contemplates to perform start up operation prior to commencing electric power generation in a way wherein if the gas flow passages of the separators 5 of the polymer electrolyte fuel cell assume the parallel flow passage configuration, the flow passage configuration changeover mechanism is actuated to change over the gas flow passages of the separators 5 to the comb-shaped flow passage configuration under which start-up operation is executed to cause hydrogen gas to positively flow into the gas diffusion layer 4 for rapidly removing air remaining inside the gas diffusion layer 4 due to a stream of hydrogen gas for thereby suppressing corrosion of the carbon carrier as described above.

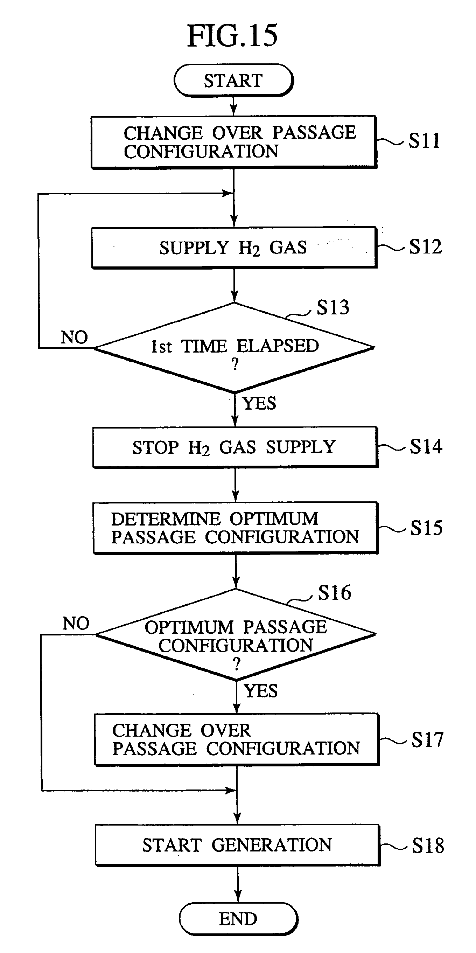

Now, a basic sequence of start-up operation in the presently filed embodiment is briefly described with reference to FIG. 15. Incidentally, here, the presently filed embodiment is described in conjunction with an example where electric power generation of the polymer electrolyte fuel cell is stopped under a condition where the gas flow passages of the separators 5 are rendered to assume the parallel flow passage configuration. Further, such operation is executed by a controller, which is not shown, of a fuel cell system involving the polymer electrolyte fuel cell.

During start-up operation, first, if the gas flow passages of the separators 5 are rendered to assume the parallel flow passage configuration, the flow passage configuration changeover mechanism is actuated, changing over the gas flow passages of the separators 5 from the parallel flow passage configuration to the comb-shaped flow passage configuration (step S11).

Next, under a condition where the gas flow passages of the separators 5 are rendered to assume the comb-shaped flow passage configuration, hydrogen gas (fuel gas) begins to be supplied to the fuel electrode (step S12). Supply of hydrogen gas to the fuel electrode is continued until a given preset time interval elapses, and supply of hydrogen gas under the comb-shaped flow passage configuration effectively results in removal of air remaining inside the gas diffusion layer 4 closer to the fuel electrode.

Subsequently, if judgment is made that the predetermined time interval has elapsed after commencement of supplying hydrogen gas (step S13), then, supply of hydrogen gas is temporarily interrupted (step S14). Also, if judgment is made that no predetermined time interval has elapsed after commencement of supplying hydrogen gas (step S13), then, operation is routed back to step S12.

Then, in succession to operation in step S14, judgment is made to find which of the flow passage configuration between the parallel flow passage configuration and the comb-shaped flow passage configuration is the optimum flow passage configuration (step S15).

Consecutively, at this instant, since the gas flow passages of the separators are rendered to assume the comb-shaped flow passage configuration, if judgment is made that the parallel flow passage configuration is optimum (step S16), the flow passage configuration changeover mechanism is actuated, thereby changing over the gas flow passages of the separators 5 from the comb-shaped flow passage configuration to the parallel flow passage configuration (step S17) and, thereafter, the polymer electrolyte fuel cell is commenced to generate electric power (step S 18), thereby terminating a series of current operations.

On the contrary, if judgment is made that the comb-shaped flow passage configuration is optimum (step S16), the polymer electrolyte fuel cell is commenced to generate electric power without changing over the flow passage configuration (step S18), thereby terminating a series of current operations.

As set forth above, with the structure of the presently filed embodiment, since hydrogen gas is supplied to the fuel electrode during start-up operation prior to commencing to generate electric power under the condition where the gas flow passages of the separators are rendered to assume the comb-shaped flow passage configuration, residual air can be rapidly expelled from the gas diffusion layer 4 closer to the fuel electrode through a forcible convection process. Accordingly, corrosion of the carbon carrier caused by residual air can be effectively suppressed, making it possible to achieve improvement over a durability of the polymer electrolyte fuel cell.

In summary of the foregoing description, with the various embodiments of the present invention, actuating the flow passage configuration changeover mechanism depending upon the operating conditions such as electric power generating conditions enables the flow passage configuration of the gas flow passages formed in the separators to assume the optimum flow passage configuration, thereby providing a capability of effectively suppressing the occurrence of flooding and draying of the polymer electrolyte membrane. Consequently, it becomes possible to realize stable electric power generation of the polymer electrolyte fuel cell at all times in compliance with a variety of operating conditions involving operation to generate electric power at a low electric current density and operation to generate electric power at a high electric current density.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A polymer electrolyte fuel cell comprising:

   an electric power generating cell (CL) provided with:

      a fuel electrode (2);

an oxidizer electrode (3);
a polymer electrolyte membrane (1) sandwiched between the fuel electrode and the oxidizer electrode; and
a separator (5) formed with a gas flow passage (7) for reaction gas to be supplied to at least one of the
fuel electrode and the oxidizer electrode; and

a flow passage changeover mechanism (10, 11, 21, 22, 31, 32) changing over a configuration of the gas flow
passage in accordance with an operating condition of a polymer electrolyte fuel cell (FC).

2. The polymer electrolyte fuel cell according to claim 1, wherein the gas flow passage (7) include a plurality of parallel flow passages through which an inlet of the reaction gas and an outlet of the reaction gas communicate with one another, and the flow passage changeover mechanism (10, 11, 21, 22, 31, 32) is operative to execute an opening and closing operation to selectively open and close a portion of the inlet of the reaction gas in the plurality of parallel flow passages and a portion of the outlet of the reaction gas of the plurality of parallel flow passages for thereby changing over the configuration of the gas flow passage.

3. The polymer electrolyte fuel cell according to claim 2, wherein the opening and closing operation of the flow passage changeover mechanism (10, 11, 21, 22, 31, 32) allows to establish either one of a parallel flow passage configuration, through which the plurality of parallel flow passages (7) permit the inlet of the reaction gas and the outlet of the reaction gas to communicate with one another, and a comb-shaped flow passage configuration through which the plurality of parallel flow passages have parallel flow passages, in which the portion of the inlet is blocked, and another parallel flow passages, in which the portion of the outlet is blocked, to be alternately arrayed in a comb-shape.

4. The polymer electrolyte fuel cell according to claim 2 or 3, wherein the flow passage changeover mechanism (10, 11, 21, 22, 31, 32) includes a movable member, which is relatively movable with respect to the separator (5), whose movement allows the opening and closing operation to be executed.

5. The polymer electrolyte fuel cell according to claim 4, wherein the electric power generating cell (CL) includes a plurality of units that are laminated in a stack direction (z) via the separator (5), and the movable member (10, 11, 21, 22) is operative to move in a direction crossing the stack direction.

6. The polymer electrolyte fuel cell according to claim 5, wherein the movable member (10, 11, 21, 22) has concavo-convex portions to selectively match concavo-convex portions by which the plurality of parallel flow passages (7) are defined.

7. The polymer electrolyte fuel cell according to claim 6, wherein the inlet of the reaction gas includes a gas-supply manifold (8) that is formed through the separator (5) so as to extend in the stack direction (z), and the outlet of the reaction gas includes a gas-exhaust manifold (9) that is formed through the separator so as to extend in the stack direction whereby the movable member (21, 22) extends through the gas-supply manifold and the gas-exhaust manifold, respectively, to be operative to move in the stack direction.

8. The polymer electrolyte fuel cell according to claim 7, wherein the movable member (21, 22) includes a through-bore portion (23, 24) that selectively matches the plurality of parallel flow passages (7).

9. The polymer electrolyte fuel cell according to claim 2 or 3, wherein the flow passage changeover mechanism (31, 32) includes a deformable member that is deformable upon absorbing water such that upon deformation of the deformable member, the opening and closing operation is executed.

10. The polymer electrolyte fuel cell according to claim 9, wherein the deformable member (31, 32) is selectively brought into alignment with the plurality of parallel flow passages (7).

11. The polymer electrolyte fuel cell according to any of claims 2 to 10, further comprising an electric power generating condition detector (SR1) that detects an electric power generating condition of the polymer electrolyte fuel cell (FC); wherein depending upon the electric power generating condition detected by the electric power generating condition detector, the flow passage changeover mechanism (10, 11, 21, 22, 31, 32) perform the opening and closing operation for thereby altering the configuration of the gas flow passage.

12. The polymer electrolyte fuel cell according to any of claims 2 to 11, further comprising a moisture content detector (SR2) that detects an amount of moisture passing through the gas flow passage (7);

wherein depending upon the amount of moisture detected by the moisture content detector, the flow passage changeover mechanism (10, 11, 21, 22, 31, 32) perform the opening and closing operation for thereby altering the configuration of the gas flow passage (7).

13. The polymer electrolyte fuel cell according to any of claims 2 to 12, wherein when performing purging operation, in which gas is supplied, when interrupting electric power generation of the polymer electrolyte fuel cell (FC), the flow passage changeover mechanism (10, 11, 21, 22, 31, 32) operates to alter the configuration of the gas flow passage (7).

14. The polymer electrolyte fuel cell according to claim 13, wherein the configuration of the gas flow passage (7) includes either one of a parallel flow passage configuration, through which the plurality of parallel flow passages (7) permit the inlet of the reaction gas and the outlet of the reaction gas to communicate with one another, and a comb-shaped flow passage configuration through which the plurality of parallel flow passages have parallel flow passages, in which the portions of the inlet are blocked, and another parallel flow passages, in which the portions of the outlet are blocked, to be alternately arrayed in a comb-shape.

15. The polymer electrolyte fuel cell according to claim 14, wherein during a period in which a first time interval elapses from a time at which the purging operation is commenced, the purging operation is continued under a condition where the configuration of the gas flow passage (7) establishes either one of the parallel flow passage configuration and the comb-shaped flow passage configuration, whereas when the first predetermined time interval has elapsed, the flow passage changeover mechanism (10, 11, 21, 22, 31, 32) is actuated to change over the configuration of the gas flow passage into the other flow passage configuration to perform the purging operation under a condition in which the other flow passage configuration is maintained until a time at which a second predetermined time interval elapses.

16. The polymer electrolyte fuel cell according to any of claims 2 to 15, wherein start-up operation is performed to supply fuel gas to the fuel electrode (2) of the electric power generating cell (CL) prior to commencing electric power generating operation of the polymer electrolyte fuel cell (FC), the flow passage configuration changeover mechanism (10, 11, 21, 22, 31, 32) is actuated to alter the configuration of the gas flow passage (7).

17. The polymer electrolyte fuel cell according to claim 16, wherein the configuration of the gas flow passage (7) includes either one of a parallel flow passage configuration, through which the plurality of parallel flow passages (7) permit the inlet of the reaction gas and the outlet of the reaction gas to communicate with one another, and a comb-shaped flow passage configuration through which the plurality of parallel flow passages have parallel flow passages, in which the portions of the inlet are blocked, and another parallel flow passages, in which the portions of the outlet are blocked, to be alternately arrayed in a comb-shape.

18. The polymer electrolyte fuel cell according to any of claims 2 to 17, wherein when the polymer electrolyte fuel cell (FC) is generating electric power, the flow passage configuration changeover mechanism (10, 11, 21, 22, 31, 32) is actuated to alter the configuration of the gas flow passage (7).

19. A method of changing over gas flow passages of a polymer electrolyte fuel cell provided with an electric power generating cell (CL) having a fuel electrode (2), an oxidizer electrode (3), a polymer electrolyte membrane (1) sandwiched between the fuel electrode and the oxidizer electrode, and a separator (5) formed with gas flow passage (7) for reaction gas to be supplied to at least one of the fuel electrode and the oxidizer electrode, the method comprising:

detecting an operating condition of a polymer electrolyte fuel cell (FC); and
changing over a configuration of the gas flow passage in accordance with the operating condition.

# FIG.1

# FIG.2

EP 1 519 438 A2

# FIG.3

# FIG.4

# FIG.5

# FIG.6

# FIG.7

EP 1 519 438 A2

# FIG.8

# FIG.9

## FIG.10

EP 1 519 438 A2

FIG.11A

8                              7       9

31             5

z

0 → x

FIG.11B

8                              7       9

31             5

z

0 → x

EP 1 519 438 A2

# FIG.12

```
              ┌─────────────┐
              │    START    │
              └─────────────┘
                     │
                     ▼
         ┌───────────────────────┐
         │   STOP  GENERATION    │ ～S1
         └───────────────────────┘
                     │
      ┌──────────────┤
      │              ▼
      │  ┌───────────────────────┐
      │  │   SUPPLY  PURGE  GAS   │ ～S2
      │  └───────────────────────┘
      │              │
      │              ▼          ～S3
      │         ╱─────────────╲
      │  NO    ╱                ╲
      └───────╱  1st TIME ELAPSED ╲
              ╲        ?         ╱
               ╲               ╱
                ╲─────────────╱
                     │ YES
                     ▼
         ┌───────────────────────┐
         │   CHANGE  OVER        │ ～S4
         │ PASSAGE CONFIGURATION │
         └───────────────────────┘
                     │
      ┌──────────────┤
      │              ▼
      │  ┌───────────────────────┐
      │  │   SUPPLY  PURGE  GAS   │ ～S5
      │  └───────────────────────┘
      │              │
      │              ▼          ～S6
      │         ╱─────────────╲
      │  NO    ╱                ╲
      └───────╱  2nd TIME ELAPSED╲
              ╲        ?         ╱
               ╲               ╱
                ╲─────────────╱
                     │ YES
                     ▼
              ┌─────────────┐
              │     END     │
              └─────────────┘
```

# FIG.13

$$H_2 \to 2H^+ + 2e^-$$

H$_2$/AIR BOUNDARY

$$4H^+ + O_2 + 4e^- \to 2H_2O$$

H$_2$ GAS

H$_2$ GAS

AIR

AIR

$H^+$

$e^-$

$e^-$

$H^+$

AIR

AIR

$$2H^+ + 1/2O_2 + 2e^- \to H_2O$$

$$C + 2H_2O \to CO_2 + 4H^+ + 4e^-$$

# FIG.14

$$2H^+ + 1/2O_2 + 2e^- \rightarrow H_2O$$

$$1/2C + H_2O \rightarrow 1/2CO_2 + 2H^+ + 2e^-$$

# FIG.15

START

CHANGE OVER PASSAGE
CONFIGURATION — S11

SUPPLY $H_2$ GAS — S12

S13

NO ← 1st TIME ELAPSED
?

YES

STOP $H_2$ GAS SUPPLY — S14

DETERMINE OPTIMUM
PASSAGE CONFIGURATION — S15

S16

NO ← OPTIMUM PASSAGE
CONFIGURATION
?

YES

CHANGE OVER
PASSAGE CONFIGURATION — S17

START GENERATION — S18

END